# EUROPÄISCHE PATENTSCHRIFT

(11) **EP 2 249 121 B1**
(45) Veröffentlichungstag und Bekanntmachung des Hinweises auf die Patenterteilung: **16.11.2011**
(21) Anmeldenummer: 10004694.5
(22) Anmeldetag: 04.05.2010
(51) Int. Cl.: G01B 5/08, G01B 5/12, G01B 3/46, G01B 7/00

(54) **Messtaster**
Measuring probe
Palpeur

(30) Priorität: 04.05.2009 DE 102009019471
(43) Veröffentlichungstag der Anmeldung: 10.11.2010
(73) Patentinhaber: Hacmann, Hartmut, 64807 Dieburg (DE)
(72) Erfinder:
(74) Vertreter: Katscher Habermann Patentanwälte

(56) Entgegenhaltungen:
- EP-A1- 0 831 294
- EP-B1- 0 771 405
- US-A- 5 224 274

## Beschreibung

Die Erfindung betrifft einen Messtaster mit einem Grundkörper, mit mindestens zwei konzentrisch zu einer Drehachse an dem Grundkörper federnd gelagerten Spreizarmen und mit mindestens zwei radial verlagerbaren Taststiften, wobei jeder Taststift an einem zugeordneten Spreizarm derart gelagert ist, dass eine radiale Auslenkung des Taststiftes in ein wegproportionales Messsignal umwandelbar ist.

Messtaster sind berührende Wegaufnehmer, wobei eine Oberfläche abgetastet und ein dem Messweg proportionales Messsignal erzeugt wird. Messtaster werden insbesondere in der Fertigungsmesstechnik eingesetzt, um mit möglichst einfachen und kostengünstigen Mitteln beispielsweise eine rasche Kontrolle und stichprobenartige Qualitätssicherung von in großer Anzahl angefertigten Werkstücken zu ermöglichen.

Messtaster mit mindestens zwei radial verlagerbaren Taststiften eignen sich vor allem als Innenmessgeräte zur Überprüfung von Bohrungen und radial symmetrischen Ausnehmungen. Während einer Drehbewegung des Grundkörpers des Messtasters erfassen die radial vorspringenden Taststifte den Bohrungsdurchmesser, wobei jede radiale Lageveränderung der Taststifte in ein wegproportionales Messsignal umgewandelt wird.

Neben dem aus der Praxis bekannten Messtaster der eingangs genannten Gattung sind verschiedene Weiterentwicklungen bekannt, die im Hinblick auf unterschiedliche Anforderungen jeweils daran angepasste, vorteilhafte Eigenschaften aufweisen. Aus EP 0 699 294 B1 ist ein Bohrungsmessdorn bekannt, der eine gleichzeitige Messung an mehreren axial beabstandeten Messstellen ermöglicht. Aus EP 0 771 405 B1 ist ein Messtaster bekannt, der drei symmetrisch zueinander angeordnete Spreizarme mit jeweils einem Taststift aufweist, so dass mit einfachen Mitteln eine präzise Drei-Punkt-Messung eines Bohrungsdurchmessers ermöglicht wird. EP0831294 zeigt einen messtaster zum Messen sowohl eines Innen- als and einen Aussendurchmessers.

Allen vorangehend genannten Messtastern ist gemeinsam, dass die radial vorspringenden Taststifte an einem Grundkörper angeordnet sind, der üblicherweise eine zumindest näherungsweise zylinderförmige Formgebung aufweist und der sich längs einer Drehachse bis in den axialen Bereich erstreckt, in welchem die Bohrungsdurchmesser oder dergleichen des zu überprüfenden Werkstücks erfasst und vermessen werden.

Nachteilig ist dabei, dass mit derartigen Messtastern ausschließlich ein Innendurchmesser einer Bohrung vermessen werden kann, wobei der Innenraum der Bohrung frei von störenden Erhebungen oder Ausformungen sein muss, damit der Messtaster in die Bohrung eingeführt und zum Ausmessen des Bohrungsdurchmessers verwendet werden kann. Die Kontrolle bzw. Erfassung eines Außendurchmessers einer radialsymmetrischen Erhebung oder dergleichen ist mit derartigen Messtastern grundsätzlich nicht möglich. Aufgabe der vorliegenden Erfindung ist es dem zu Folge, einen Messtaster der eingangs genannten Gattung so auszugestalten, dass mit möglichst einfachen konstruktiven Mitteln auch ein Außendurchmesser oder aber ein Innendurchmesser einer radialsymmetrischen Ausnehmung, beispielsweise einer ringförmigen Ausnehmung oder einer Bohrung mit Erhebungen im Innenraum, an einem Werkstück abgetastet und vermessen, bzw. kontrolliert werden kann.

Diese Aufgabe wird gemäß Anspruch 1 erfindungsgemäß dadurch gelöst, dass der Messtaster mindestens zwei parallel zu der Drehachse ausgerichtete Tasthebel aufweist, deren erstes Ende mit einem zugeordneten Taststift in Kontakt bringbar ist und deren zweites, freies Ende einen Tastkopf zum Abtasten einer radialsymmetrischen Werkstückoberfläche aufweist.

Der Tasthebel kann eine geringe radiale Ausdehnung aufweisen und unmittelbar benachbart zu der abzutastenden Werkstückoberfläche parallel zu der Drehachse angeordnet sein. Der Tasthebel ermöglicht es, einen die Oberfläche abtastenden Tastkopf axial beabstandet zu dem zugeordneten, radial verlagerbaren Taststift und insbesondere axial beabstandet zu dem im Bereich der Drehachse befindlichen Grundkörper mit den Spreizarmen anzuordnen. Um die radialsymmetrische Werkstückoberfläche abtasten zu können ist lediglich ein hülsenförmiger Freiraum benachbart zu der Werkstückoberfläche erforderlich, in welchem die Tasthebel um die Drehachse verschwenkt werden bzw. rotieren können.

Da die Mess- und Auswertetechnik der aus der Praxis bereits bekannten Messtaste im Wesentlichen unverändert übernommen werden können und lediglich mittels einer geeigneten Hebelmechanik eine radiale Verlagerung des an dem Tasthebel angeordneten Tastkopfs auf dem zugeordneten Taststift des Messtasters übertragen werden muss, können die hierfür notwendigen konstruktiven Maßnahmen ohne größeren Aufwand und kostengünstig umgesetzt werden.

Vorzugsweise ist vorgesehen, dass beide Hebelarme des Tasthebels gleich lang sind. Eine Verlagerung des an dem zweiten, freien Ende des Tasthebels befindlichen Tastkopfes bewirkt bei gleich langen Hebelarmen eine gleich große, entgegengesetzte Verlagerung des zugeordneten Taststiftes, wodurch eine besonders einfache Auswertung der Messsignale ermöglicht wird.

Es ist jedoch ebenfalls denkbar, die beiden Hebelarme des Tasthebels nicht gleich lang, sondern in einem vorgebbaren Längenverhältnis auszugestalten, wodurch eine Untersetzung bzw. Übersetzung des Messweges des Tastkopfs relativ zu einer entsprechenden, entgegengesetzt gerichteten Verlagerung des Taststifts bewirkt werden kann.

Um einen Außendurchmesser eines radial symmetrischen Werkstücks abtasten zu können ist vorgesehen, dass der Tastkopf des Tasthebels radial nach innen gerichtet ist. Der an dem Spreizarm federnd gelagerte und radial nach außen vorgespannte Taststift wird während des Abtastens in Abhängigkeit von der abgetasteten Werkstückoberfläche entgegen der Federkraft des Spreizarms nach innen bzw. zur Drehachse hin verlagert und die jeweilige Lageänderung in ein Wegemesssignal umgewandelt, das proportional zur der Verlagerung des Tastkopfs ist.

Um mit dem Messtaster einen Innendurchmesser abtasten zu können ist in vorteilhafter Weise vorgesehen, dass der Tastkopf des Tasthebels radial nach außen gerichtet ist und dass erste, mit dem Taststift in Kontakt bringbare Ende des Tasthebels entgegen einer radial nach innen gerichteten Federkraft verschwenkbar ist. Der nach außen gerichtete Tastkopf des Tasthebels wird bei einer derartigen Ausgestaltung nicht durch eine Federkraft der Spreizarme, die über den zugeordneten Taststift auf den Tasthebel übertragen wird, nach außen gedrückt, sondern mittels einer radial nach innen gerichteten Federkraft, die größer als die entgegengesetzt gerichtete Federkraft der Spreizarme sein muss. Dies kann beispielsweise durch eine von außen auf das erste, mit dem Kontaktstift in Kontakt bringbare Ende des Tasthebels einwirkende Druckfeder bewirkt werden, die in einem größeren radialen Abstand relativ zu dem Tasthebel festgelegt ist und deren Federkraft den Tasthebel radial nach innen drückt.

Um mit einem Messtaster wahlweise einen Außendurchmesser oder einen Innendurchmesser einer radial symmetrischen Werkstückoberfläche abtasten zu können ist vorgesehen, dass die Tasthebel lösbar an dem Grundkörper verbindbar sind. In Abhängigkeit von der im Einzelfall vorgesehenen Verwendung des Messtasters und den Abmessungen des abzutastenden Werkstücks können unterschiedlich ausgestaltete Tasthebel an dem Grundkörper des Messtasters festgelegt bzw. mit diesem verbunden werden. In Abhängigkeit von der radialen Ausrichtung des Tastkopfs kann ein Innendurchmesser oder ein Außendurchmesser abgetastet werden.

Durch die Länge des Tasthebels kann der axiale Abstand zwischen dem Taststift und dem Tastkopf vorgegeben werden. Durch das Längenverhältnis der beiden Hebelarme kann eine Untersetzung oder eine Übersetzung des Messwegs erreicht werden. Wenn lediglich wenig Raum im Bereich der abzutastenden Werksoberfläche für den Tastheber zur Verfügung steht, kann ein möglichst dünner Tasthebel verwendet werden, während ansonsten ein breiterer, mechanisch stärker belastbarer Tasthebel verwendet werden kann, der weniger empfindlich ist und gegebenenfalls präzisere Messergebnisse ermöglicht.

Insbesondere bei einer Ausgestaltung des Messtasters mit drei oder mehreren radial verlagerbaren Taststiften kann es zweckmäßig sein, dass der Grundkörper einen wechselbaren Aufsatz zum Verbinden der Tasthebel mit dem Grundkörper aufweist. Um die Tasthebel für einen neuen Verwendungszweck des Messtasters auszuwechseln muss lediglich der wechselbare Aufsatz entfernt und ein für den neuen Verwendungszweck geeigneter Aufsatz mit daran angepassten Tasthebeln mit dem Grundkörper verbunden werden. Eine Demontage der einzelnen Tasthebel und die anschließende Montage der neuen Tasthebel sind bei Verwendung eines bereits vormontierten, wechselbaren Aufsatzes nicht mehr erforderlich.

Gemäß einer besonders vorteilhaften Ausgestaltung des Erfindungsgedankens ist vorgesehen, dass der Messtaster jeweils drei konzentrisch angeordnete Spreizarme, drei Taststifte und drei Tasthebel aufweist. Durch die Ausgestaltung des Messtasters als Drei-Punkt-Messtaster kann die Präzision der Messungen gesteigert und eine gegebenenfalls Modalität der Werkstückoberfläche besser nachgewiesen werden.

Nachfolgend werden Ausführungsbeispiele des Erfindungsgedankens näher erläutert, die in der Zeichnung dargestellt sind. Es zeigt:
Fig. 1 eine Schnittansicht eines Drei-Punkt-Messtasters gemäß dem Stand der Technik,
Fig. 2 eine Schnittansicht des in Fig. 1 dargestellten Messtasters längs der Linie II-II,
Fig. 3 eine teilweise geschnittene Ansicht durch einen erfindungsgemäßen Messtaster mit zwei Tasthebeln mit jeweils einem radial nach innen gerichteten Tastkopf, und
Fig. 4 eine andere Ausgestaltung eines erfindungsgemäßen Messtasters mit Tasthebeln mit jeweils einem nach außen gerichteten Tastkopf.

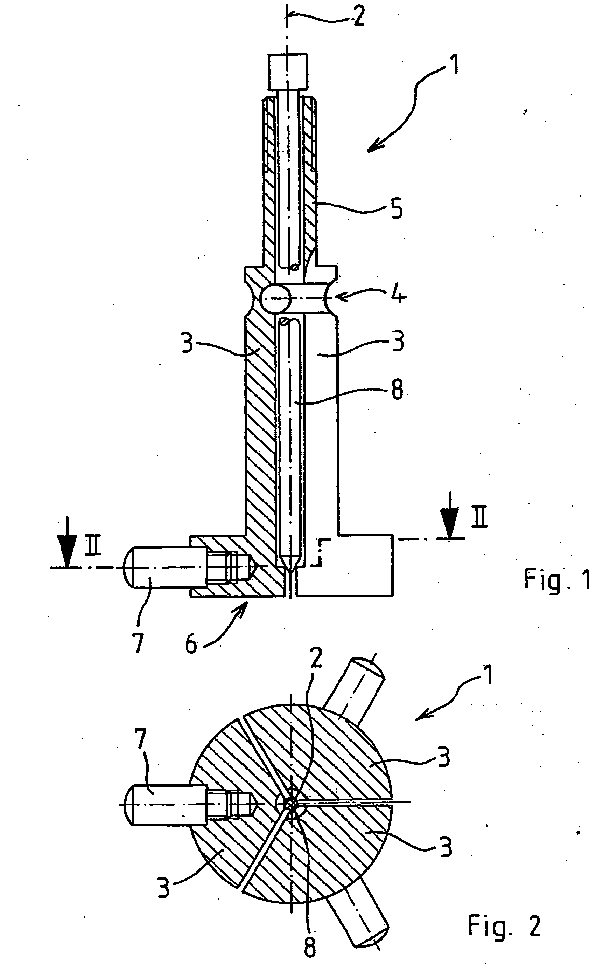

In den Fig. 1 und 2 ist exemplarisch ein Messtaster 1 für eine Drei-Punkt-Messung eines Innendurchmessers einer Bohrung dargestellt, wie er aus dem Stand der Technik bereits bekannt ist. Der Messtaster 1 weist drei parallel zu einer Drehachse 2 ausgerichtete Spreizarme 3 auf, die jeweils über einen Schwächungsabschnitt 4 mit einem holzylindrischen Grundkörper 5 verbunden sind. An einem dem Grundkörper 5 abgewandten Ende 6 der Spreizarme 3 ist jeweils ein radial vorspringender Taststift 7 befestigt. Wird der Messtaster 1 um die Drehachse 2 verdreht, so können die Taststifte 7 einen Innendurchmesser einer Bohrung eines nicht dargestellten Werkstücks abtasten und werden dabei auf Grund der Federkraft der Spreizarme 3 radial nach außen an die Werkstückoberfläche gedrückt bzw. in Abhängigkeit von dem jeweils abgetasteten Innendurchmesser der Bohrung nach innen in Richtung der Drehachse 2 ausgelenkt bzw. verlagert. Die Auslenkung der Taststifte 7 wird auf eine mittig in dem Grundkörper 5 axial verlagerbare Tastnabe 8 übertragen, deren axiale Verlagerung in ein der Auslenkung der Taststifte 7 proportionales Messsignal umgewandelt werden kann.

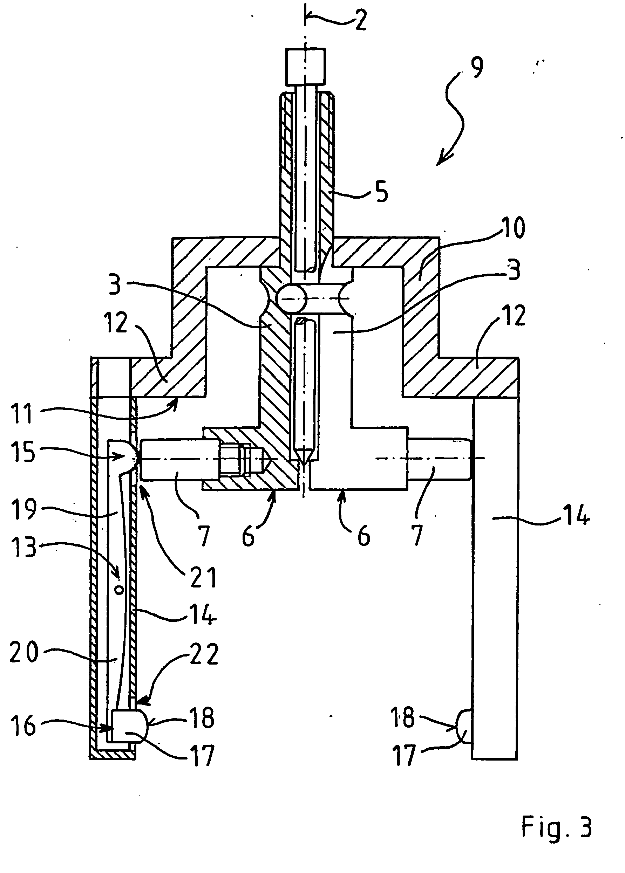

Eine erfindungsgemäße Weiterentwicklung des in den Fig. 1 und 2 dargestellten Messtasters 1 wird in Fig. 3 schematisch und in teilweiser Schnittansicht dargestellt. Ein Messtaster 9 weist ebenfalls einen Grundkörper 5, daran ausgebildete Spreizarme 3 und an jedem Ende 6 eines Spreizarms 3 einen radial nach außen vorspringenden Taststift 7 auf. Mit dem Grundkörper 5 ist ein Aufsatz 10 verbindbar, der die Spreizarme 3 hülsenförmig umgibt und bis an die seitlich vorspringenden Taststifte 7 ragt. An einem den Taststiften 7 zugewandten Ende 11 des Aufsatzes 10 ist ein ebenfalls radial vorspringender Befestigungsflansch 12 ausgebildet. An dem Befestigungsflansch 12 des Aufsatzes 10 sind parallel zu der Drehachse 2 ausgerichtete Tasthebel 13 in einem hülsenförmige Hebelgehäuse 14 angeordnet. Jedem Taststift 7 ist ein Tasthebel 13 zugeordnet. Ein erstes Ende 15 des Tasthebels 13 steht mit dem zugeordneten Taststift 7 in Berührungskontakt. An einem zweiten Ende 16 des Tasthebels 13 ist ein radial nach innen in Richtung zur Drehachse 2 vorspringender Tastkopf 17 ausgebildet. Der Tastkopf 17 weist eine gekrümmte Tastfläche 18 auf, deren Formgebung daran angepasst ist, einen Außendurchmesser einer radial symmetrischen Werkstückoberfläche möglichst präzise abtasten und ermitteln zu können.

Da die Taststifte 7 nicht die Werkstückoberfläche abtasten, sondern lediglich die Auslenkung der Tastköpfe 17 übertragen, können die den ersten Enden 15 der Tasthebel 13 zugewandten Enden der Taststifte 7 im Wesentlichen eben ausgestaltet sein. Es sind auch andere Formgebungen denkbar, die bei einem Zusammenwirken mit dem ersten Ende 15 des zugeordneten Tasthebels 13 eine möglichst präzise Übertragung der Auslenkung des Tastkopfes 17 des betreffenden Tasthebels 13 ermöglichen.

Der Tasthebel 13 weist zwei Hebelarme 19, 20 mit einer im Wesentlichen übereinstimmenden Länge auf. Der Tasthebel 13 ist mittig schwenkbar an dem Hebelgehäuse 14 gelagert. Durch jeweils eine daran angepasste Öffnung 21, 22 hindurch steht das erste Ende 15 des Tasthebels 13 mit dem zugeordneten Taststift 7 in Berührungskontakt bzw. ragt der Tastkopf 17 aus dem Hebelgehäuse 14 in Richtung der Drehachse 2 heraus. Durch die Federkraft der Spreizarme 3, die über die Taststifte 7 auf den jeweils zugeordneten Tasthebel 13 übertragen werden, wird das erste Ende 15 des Tasthebels 13 nach außen verschwenkt und dadurch der Tastkopf 17 an dem zweiten Ende 16 des Tasthebels 13 nach innen in Richtung der abzutastenden radial symmetrischen Werkstückoberfläche verlagert an die Werkstückoberfläche angepresst. Während eines Abtastvorgangs führte jede Ungleichmäßigkeit der abgetasteten Werkstückoberfläche zu einer wegproportionalen Auslenkung des die Werkstückoberfläche berührenden Tastkopfs 17, die mittels des Tasthebels 13 auf den Taststift 7 übertragen und in bereits bekannter Weise erfasst und ausgewertet werden kann.

Durch unterschiedlich lange Hebelarme 19, 20 kann eine Untersetzung bzw. eine Übersetzung zwischen der Auslenkung des Tastkopfes 17 und der entsprechenden Verlagerung des zugeordneten Taststifts 7 erreicht werden.

Das Hebelgehäuse 14 ist lösbar an dem Befestigungsflansch 12 des Aufsatzes 10 verbindbar, so dass beispielsweise unterschiedlich lange Tasthebel 13 oder unterschiedlich ausgestaltete Tasthebel 13 über den Aufsatz 10 mit dem Messtaster 9 verbindbar sind.

Die Hebelgehäuse 14 können beispielsweise mit Schrauben oder einem Bajonettverschluss an dem Aufsatz 10 befestigbar sein. Es ist ebenfalls denkbar, dass sämtliche Hebelgehäuse 14 einstückig an dem Aufsatz 10 ausgebildet sind und verschiedene Aufsätze 10 zum Verbinden mit dem Grundkörper 5 vorgesehen sind, um Ungenauigkeiten zu vermeiden, die bei einem häufigen Wechsel der einzelnen Hebelgehäuse 14 an dem Aufsatz 10 möglicherweise auftreten könnten.

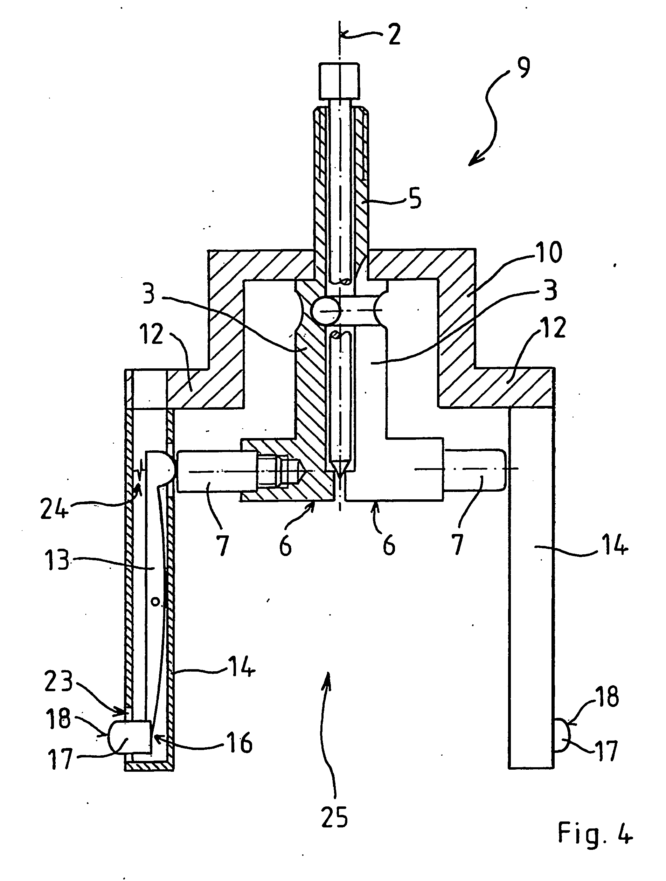

Bei dem in Fig. 4 ebenfalls schematisch dargestellten Ausführungsbeispiel ist der Tastkopf 17 an dem zweiten Ende 16 des Tasthebels 13 nicht radial nach innen ausgerichtet (Fig. 3), sondern radial nach außen ausgerichtet und ragt durch eine daran angepasste Öffnung 23 des Hebelgehäuses 14 nach außen vorspringend aus diesem heraus. Mittels einer Druckfeder 24, deren Federkraft größer als die durch die Spreizarme 3 auf die Taststifte 7 ausgeübte Federkraft ist, wird der zugeordnete Taststift 7 in Richtung der Drehachse 2 hin nach innen gedrückt. Während einer Drehbewegung des Messtasters 9 kann mittels des nach außen vorspringenden Tastkopfs 17 ein Innendurchmesser einer Bohrung abgetastet und vermessen werden. Ein zwischen den Hebelgehäusen 14 befindlicher Innenraum 25 wird während des Messvorgangs für den Messtaster 9 nicht benötigt, so dass in diesem Innenraum 25 vorspringende Ausformungen des abzutastenden Werkstücks vorhanden sein können.

An Stelle der in den Fig. 3 und 4 dargestellten Ausführungsbeispiele kann der Messtaster 9 auch jeweils drei Spreizarme 3 mit jeweils einem zugeordneten Taststift 7, einem Hebelarm 13 und einem Tastkopf 17 aufweisen, wobei jeder Hebelarm 13 in einem zugeordneten Hebelgehäuse 14 gelagert ist, das über einen Aufsatz 10 mit dem Grundkörper 5 des Messtasters 9 verbindbar ist. Die drei Spreizarme 3 sind symmetrisch längs eines Umfangs an dem Grundkörper 5 angeordnet und jedem Spreizarm 3 ist ein Tasthebel 13 mit einem Tastkopf 17 zugeordnet, dessen Auslenkung über einen Taststift 7 in ein wegproportionales Messsignal umwandelbar ist. Mit einem derartigen Drei-Punkt-Messtaster 9 können je nach Ausrichtung der drei Tastköpfe 17 sowohl Innendurchmesser als auch Außendurchmesser einer rotationssymmetrischen Werkstückoberfläche präzise abgetastet und vermessen, bzw. kontrolliert werden.

## Patentansprüche

1. Messtaster (9) mit einem Grundkörper (5), mit mindestens zwei konzentrisch zu einer Drehachse (2) an dem Grundkörper federnd gelagerten Spreizarmen (3) und mit mindestens zwei radial verlagerbaren Taststiften (7), wobei jeder Taststift an einem zugeordneten Spreizarm derart gelagert ist, so dass eine radiale Auslenkung des Taststiftes in ein wegproportionales Messsignal umwandelbar ist, **dadurch gekennzeichnet, dass** der Messtaster (9) mindestens zwei parallel zu der Drehachse (2) ausgerichtete Tasthebel (13) aufweist, deren erstes Ende (15) mit einem zugeordneten Taststift (7) in Kontakt bringbar ist und deren zweites, freies Ende (16) einen Tastkopf (17) zum Abtasten einer radialsymmetrischen Werkstückoberfläche aufweist.

2. Messtaster nach Anspruch 1, **dadurch gekennzeichnet, dass** beide Hebelarme (19) des Tasthebels (13) gleich lang sind.

3. Messtaster nach Anspruch 1 oder Anspruch 2, **dadurch gekennzeichnet, dass** der Tastkopf (17) des Tasthebels (13) radial nach innen gerichtet ist.

4. Messtaster nach Anspruch 1 oder Anspruch 2, **dadurch gekennzeichnet, dass** der Tastkopf (17) des Tasthebels (13) radial nach außen gerichtet ist und das erste, mit dem Taststift (7) in Kontakt bringbaren Ende (15) des Tasthebels (13) entgegen einer radial nach innen gerichteten Federkraft verschwenkbar ist.

5. Messtaster nach einem der vorangehenden Ansprüche, **dadurch gekennzeichnet, dass** die Tasthebel (13) lösbar an dem mit dem Grundkörper (5) verbindbar sind.

6. Messtaster nach einem der vorangehenden Ansprüche, **dadurch gekennzeichnet, dass** der Grundkörper (5) einen wechselbaren Aufsatz (10) zum Verbinden der Tasthebel (13) mit dem Grundkörper (5) aufweist.

7. Messtaster nach einem der vorangehenden Ansprüche, **dadurch gekennzeichnet, dass** der Messtaster (9) jeweils drei konzentrisch angeordnete Spreizarme (3), drei Taststifte (7) und drei Tasthebel (13) aufweist.

8. Messtaster nach Anspruch 7, **dadurch gekennzeichnet, dass** die drei Spreizarme (3) symmetrisch längs eines Umfangs an dem Grundkörper (5) angeordnet sind und jedem Spreizarm (3) ein Tasthebel (13) mit einem Tastkopf (17) zugeordnet ist, dessen Auslenkung über einen Taststift (7) in ein wegproportionales Messsignal umwandelbar ist.

## Claims

1. Measuring probe (9) having a base body (5), having at least two spreading arms (3) mounted concentrically to a rotational axis (2) on the base body in a sprung manner, and having at least two radially movable sensing pins (7), wherein each sensing pin is mounted on an assigned spreading arm in such a way that radial deflection of the sensing pin can be converted into a travel-proportional measurement signal, **characterized in that** the measuring probe (9) has at least two sensing levers (13) which are oriented parallel to the rotational axis (2) and whose first end (15) can be placed in contact with an assigned sensing pin (7) and whose second, free end (16) has a sensing head (17) for sensing a radially symmetrical workpiece surface.

2. Measuring probe according to Claim 1, **characterized in that** both lever arms (19) of the sensing lever (13) are of equal length.

3. Measuring probe according to Claim 1 or Claim 2, **characterized in that** the sensing head (17) of the sensing lever (13) is directed radially inwards.

4. Measuring probe according to Claim 1 or Claim 2, **characterized in that** the sensing head (17) of the sensing lever (13) is directed radially outwards, and the first end (15), which can be placed in contact with the sensing pin (7), of the sensing lever (13) can be pivoted counter to a spring force, which is directed radially inwards.

5. Measuring probe according to one of the preceding claims, **characterized in that** the sensing levers (13) can be detachably connected to the base body (5).

6. Measuring probe according to one of the preceding claims, **characterized in that** the base body (5) has an interchangeable fitting (10) for connecting the sensing levers (13) to the base body (5).

7. Measuring probe according to one of the preceding claims, **characterized in that** the measuring probe (9) has in each case three concentrically arranged spreading arms (3), three sensing pins (7) and three sensing levers (13).

8. Measuring probe according to Claim 7, **characterized in that** the three spreading arms (3) are arranged symmetrically along a circumference on the base body (5) and each spreading arm (3) is assigned a sensing lever (13) with a sensing head (17), the deflection of which sensing lever (13) can be converted by means of a sensing pin (7) into a travel-proportional measurement signal.

## Revendications

1. Palpeur de mesure (9) doté d'un corps de base (5), d'au moins deux bras écarteurs (3) disposés sur ressort contre le corps de base, concentriquement par rapport à un axe de rotation (2), et d'au moins deux tiges de palpation (7) pouvant être déplacées dans le plan radial, chaque tige de palpation étant disposée de telle sorte au niveau d'un bras écarteur associé, qu'une déviation radiale de la tige de palpation peut être transformée en un signal de mesure inversement proportionnel, **caractérisé en ce que** le palpeur de mesure (9) comporte au moins deux leviers de palpation (13) orientés parallèlement à l'axe de rotation (2) dont la première extrémité (15) peut être amenée en contact avec une tige de palpation (7) associée et dont la deuxième extrémité (16), libre, comporte une tête de palpation (17) permettant de palper une surface de pièce usinée symétrique dans le plan radial.

2. Palpeur de mesure selon la revendication 1, **caractérisé en ce que** les deux bras de levier (19) du levier de palpation (13) sont de même longueur.

3. Palpeur de mesure selon la revendication 1 ou 2, **caractérisé en ce que** la tête de palpation (17) du levier de palpation (13) est orientée vers l'intérieur dans le plan radial.

4. Palpeur de mesure selon la revendication 1 ou 2, **caractérisé en ce que** la tête de palpation (17) du levier de palpation (13) est orientée vers l'extérieur dans le plan radial et que la première extrémité (15) du levier de palpation (13), pouvant être amenée en contact avec la tige de palpation (7), peut être pivotée contre une force de ressort orientée vers l'intérieur dans le plan radial.

5. Palpeur de mesure selon l'une quelconque des revendications précédentes, **caractérisé en ce que** les leviers de palpation (13) peuvent être reliés de façon amovible au corps de base (5).

6. Palpeur de mesure selon l'une quelconque des revendications précédentes, **caractérisé en ce que** le corps de base (5) présente un chapeau (10) amovible pour relier le levier de palpation (13) au corps de base (5).

7. Palpeur de mesure selon l'une quelconque des revendications précédentes, **caractérisé en ce que** le palpeur de mesure (9) comporte respectivement trois bras écarteurs (3) disposés concentriquement, trois tiges de palpation (7) et trois leviers de palpation (13) .

8. Palpeur de mesure selon la revendication 7, **caractérisé en ce que** les trois bras écarteurs (3) sont disposés symétriquement, le long d'une périphérie, contre le corps de base (5) et qu'à chaque bras écarteur (3) est associé un levier de palpation (13) doté d'une tête de palpation (17) dont la déviation peut être transformée en un signal de mesure inversement proportionnel par le biais d'une tige de palpation (7).
